# EUROPÄISCHE PATENTANMELDUNG

(11) **EP 0 860 938 A1**
(43) Veröffentlichungstag der Anmeldung: **26.08.1998**
(21) Anmeldenummer: 97121016.6
(22) Anmeldetag: 29.11.1997
(51) Int. Cl.: H02P 7/638

(54) **Verfahren zur Leistungssteuerung eines Staubsaugers**

(30) Priorität: 20.02.1997 DE 19706909
(71) Anmelder: Miele & Cie. GmbH & Co., D-33332 Gütersloh (DE)
(72) Erfinder: Schmedt, Andreas, 33428 Harsewinkel (DE)

(57) **Zusammenfassung**

Die Erfindung betrifft ein Verfahren zur Leistungssteuerung eines Staubsaugers, dessen Gebläse von einem Elektromotor mit Phasenanschnittsschaltung angetrieben ist, deren Leistungsschalter (Triac) verzögert angesteuert wird. Um die maximal mögliche Aufnahme-leistung des Staubsaugergebläsemotors ohne ein Überschreiten der Grenzwerte für die Oberschwingungen mit geringem Aufwand zu erhöhen, wird der Ansteuerrhythmus des Leistungsschalters der Phasenanschnittsschaltung verändert. Die Veränderungen im Ansteuerrhythmus bewirken eine Stromverteilung auf die einzelnen Oberwellen. Insbesondere die kritische dritte Oberwelle kann dadurch in ihrer Amplitude reduziert werden.

## Beschreibung

Die Erfindung betrifft ein Verfahren zur Leistungssteuerung eines Staubsaugers, dessen Gebläse von einem Elektromotor mit Phasenanschnittsschaltung angetrieben ist, deren Leistungsschalter (Triac) verzögert angesteuert wird.

Es ist zum Zwecke der Leistungssteuerung bei Staubsauger-Gebläsemotoren bekannt, die eingesetzten Universalmotore mittels einer Phasenanschnittsschaltung in der Drehzahl zu steuern. Eine solche Phasenanschnittssteuerung bewirkt immer aufgrund des zeitlichen Verlauf des Stromes nicht nur einen Wechselstrom mit der Netzfrequenz, sondern auch Oberschwingungen mit ganzzahligen Vielfachen der Netzfrequenz. Die Normen schreiben für diese Oberschwingungen Maximalwerte vor. Die Einhaltung der Maximalwerte kann derzeit nur durch eine Beschränkung in der maximal möglichen Aufnahmeleistung des eingesetzten Elektromoters realisiert werden. Bekannte Verfahren arbeiten nach dem Prinzip der gleichen zeitlichen Verzögerung der Voll- bzw. Halbwellen. Eine Phasenansteuerung nach dem Stand der Technik besteht im nahezu symmetrischen Anschneiden (verzögertes Durchschalten der 1. und 2. Halbwelle) der Vollwellen. Dies hat den Nachteil, daß die maximal mögliche Aufnahmeleistung die Grenzwerte für die Oberschwingungen überschreitet.

Der Erfindung liegt die Aufgabe zugrunde, die maximal mögliche Aufnahmeleistung des Staubsaugergebläsemotors zu erhöhen, ohne die Grenzwerte für die Oberschwingungen zu überschreiten. Dabei soll der Aufwand möglichst klein gehalten werden.

Erfindungsgemäß wird diese Aufgabe mit den im Patentanspruch 1 angegebenen Verfahrensschritte gelöst. Vorteilhatte Weiterbildungen der Erfindung ergeben sich aus den nachfolgenden Unteransprüchen.

Die erfindungsgemäßen Veränderungen im Ansteuerrhythmus bewirken eine Stromverteilung auf die einzelnen Oberwellen, insbesondere die kritische 3. Oberwelle kann in ihrer Amplitude reduziert werden.

Nach dem erfindungsgemäßen Verfahren zur Leistungssteuerung eines Staubsaugers ist ein Universalmotor als Gebläsemotor verwendet, für dessen Drehzahlsteuerung in an sich bekannter Weise eine Phasenanschnittssteuerung mit einem Triac als Leistungsschalter verwendet ist, welcher verzögert angesteuert wird.

Gemäß der Erfindung wird von einer immer gleichen Verzögerung der Ansteuerung (bspw. 1. Vollwelle oder Halbwelle verzögert mit 5ms, 2. Voll- oder Halbwelle verzögert mit 5ms), wie sie beim bekannten Technikstand üblich ist, Abstand genommen und der Ansteuerrhythmus des Leistungsschalters verändert. Insbesondere werden Vollwellen und/oder Halbwellen mit unterschiedlichen zeitlichen Verzögerungen durchgeschaltet.

So wird z. B. die 1. Vollwelle verzögert mit 5,5 ms (Millisekunden) und die 2. Vollwelle mit 4,5 ms Verzögerung durchgeschaltet. Oder es wird die 1. Halbwelle verzögert mit 5,5 ms und die 2. Halbwelle verzögert mit 4,5 ms. Auch die Kombination von Vollwellen und Halbwellen ist möglich.

Selbstverständlich kann sich der veränderte Ansteuerrhythmus auch über zwei Vollwellen und/oder Halbwellen erstrecken. Auch ist eine Erstreckung über mehr als zwei Vollwellen und/oder Halbwellen u. U. sinnvoll. Eine vorteilhafte Weiterbildung der Erfindung kann auch in einer zufälligen Abfolge verschiedener Ansteuerverzögerungen gesehen werden.

Die Erfindung ist mit geringem Aufwand an Steuerungsmitteln durchführbar. Die nicht mit gleichen zeitlichen Verzögerungen durchgeschalteten Voll- und/oder Halbwellen bzw die Veränderungen im Ansteuerrhythmus bewirken eine Stromverteilung auf die einzelnen Oberwellen. Die allgemein als kritisch und problemvoll anzusehende 3. Oberwelle kann mit dem vorgeschlagenen Verfahren in ihrer Amplitude deutlch reduziert werden. Die maximal mögliche Aufnahmeleistung des Staubsaugergebläsemotors wird vorteilhaft erhöht, ohne die Grenzwerte für die Oberschwingungen überschritten werden.

## Patentansprüche

1. Verfahren zur Leistungssteuerung eines Staubsaugers, dessen Gebläse von einem Elektromotor mit Phasenanschnittsschaltung angetrieben ist, deren Leistungsschalter (Triac) verzögert angesteuert wird,
dadurch gekennzeichnet,
daß der Ansteuerrhythmus des Leistungsschalters der Phasenanschnittsschaltung verändert wird.

2. Verfahren nach Anspruch 1,
dadurch gekennzeichnet,
daß Vollwellen und/oder Halbwellen mit unterschiedlichen zeitlichen Verzögerungen durchgeschaltet werden.

3. Verfahren nach Anspruch 1 und 2,
dadurch gekennzeichnet,
daß sich der veränderte Ansteuerrhythmus über zwei Vollwellen und/oder Halbwellen erstreckt.

4. Verfahren nach einem oder mehreren der Ansprüche 1 bis 3,
dadurch gekennzeichnet,
daß sich der veränderte Ansteuerrhythmus über mehr als zwei Vollwellen und/oder Halbwellen erstreckt.

5. Verfahren nach einem oder mehreren der Ansprüche 1 bis 4,
dadurch gekennzeichnet,
daß die Abfolge der Ansteuerverzögerungen nach dem Prinzip der Zufälligkeit gewählt ist.
